Europäisches Patentamt

European Patent Office

Office européen des brevets

(19)

(11) Publication number : **0 566 307 A2**

## EUROPEAN PATENT APPLICATION

(12)

(21) Application number : **93302698.1**

(22) Date of filing : **06.04.93**

(51) Int. Cl.⁵ : **H04N 5/232**

(30) Priority : **15.04.92 JP 95567/92**

(43) Date of publication of application :
**20.10.93 Bulletin 93/42**

(84) Designated Contracting States :
**DE FR GB**

(71) Applicant : **SONY CORPORATION**
**6-7-35 Kitashinagawa Shinagawa-ku**
**Tokyo 141 (JP)**

(72) Inventor : **Ueda, Kazuhiko, c/o Patents Division**
**Sony Corporation, 6-7-35 Kitashinagawa**
**Shinagawa-ku, Tokyo 141 (JP)**
Inventor : **Iijima, Kazuyuki, c/o Patents**
**Division**
**Sony Corporation, 6-7-35 Kitashinagawa**
**Shinagawa-ku, Tokyo 141 (JP)**
Inventor : **Yoshida, Yukihiro, c/o Patents**
**Division**
**Sony Corporation, 6-7-35 Kitashinagawa**
**Shinagawa-ku, Tokyo 141 (JP)**

(74) Representative : **Cotter, Ivan John et al**
**D. YOUNG & CO., 21 New Fetter Lane**
**London EC4A 1DA (GB)**

(54) **Automatic focusing control systems.**

(57) An automatic focusing control system has an image pickup device for producing image data of a subject, and an optical system for varying a relative position thereof with respect to the image pickup device in response to an control signal. The image data from the image pickup device is divided into a plurality of frequency bands, and level changes of image data components in the respective frequency bands are detected before and after the relative focused position on the image pickup device is varied by the optical system. A focused position of the optical system with respect to the image pickup device is estimated from a level change pattern representing the detected level changes. A control signal indicative of the estimated focused position is applied to the optical system to bring the optical system into a focused position with respect to the image pickup device.

*FIG.5*

EP 0 566 307 A2

This invention relates to automatic focusing control systems and is applicable, for example, to imaging devices such as video cameras.

One widely known automatic focusing (AF) control process for use in video cameras is generally referred to as a "hill-climbing AF control process" and detects the contrast of an image for focusing control.

The hill-climbing AF control process will briefly be described below.

In so far as the same subject is being imaged by an imaging device such as a video camera, the signal produced by the image pickup device of the video camera generally contains more high-frequency components as the optical system of the video camera focuses on the subject more sharply. Therefore, the optical system can automatically be brought into focus if its focusing lens is actuated in a manner to increase the level of high-frequency components contained in the signal generated by the image pickup device. Such a focusing principle is known as the hill-climbing AF control process.

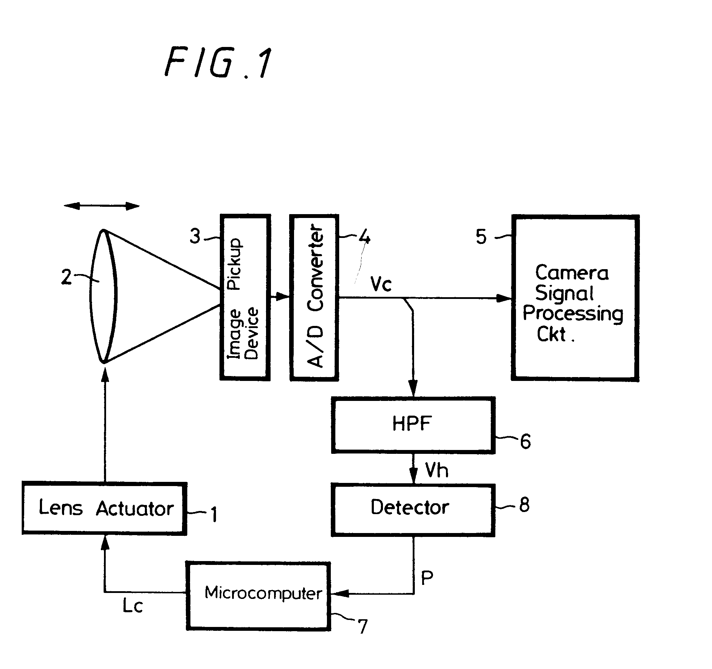

FIG. 1 of the accompanying drawings shows one previously proposed hill-climbing AF control system.

The hill-climbing AF control system shown in FIG. 1 includes a loop composed of an optical system 2, an image pickup device 3, and a signal processor comprising an A/D converter 4, a high-pass filter 6, a detector 8, a microcomputer 7, and a lens actuator 1.

An analog video signal generated by image pickup device 3 is converted by the A/D converter 4 into a digital video signal Vc, which is supplied to a camera signal processing circuit 5 and also the high-pass filter 6. The high-pass filter 6 may practically be a bandpass filter. The high-pass filter 6 extracts a high-frequency component Vh from the supplied digital video signal Vc. The high-frequency component Vh is detected by the detector 8, which produces a focus-evaluating value per field. The focus-evaluating value is then supplied from the detector 8 to the microcomputer 7, which calculates lens control information Lc according to an algorithm described below.

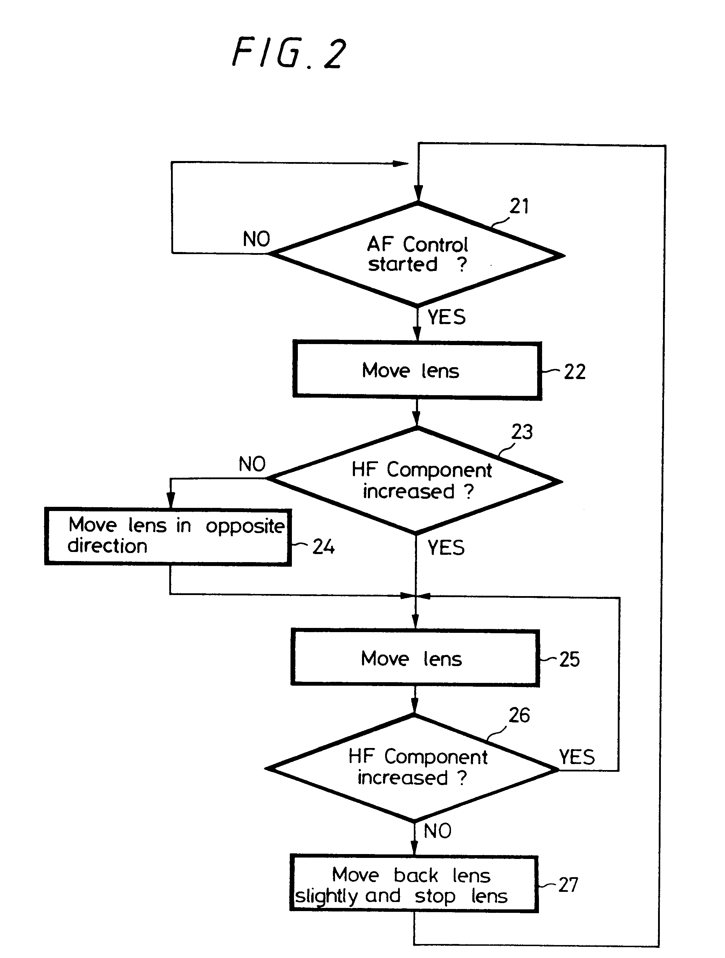

The algorithm, or a focusing control sequence of the microcomputer, is shown in the flowchart of FIG. 2 of the accompanying drawings. The focusing control sequence shown in FIG. 2 is roughly divided into the following three phases:

*Starting to move focusing lens:*

When it is necessary to focus the optical system 2 in a step 21, the focusing lens of the optical system 2 is moved in either one of two opposite directions by the lens actuator 1 in a step 22. If the focus-evaluating value is increased by the movement of the focusing lens in a step 23, then the focusing lens is further moved in the same direction in a step 25. Conversely, if the focus-evaluating value is reduced by the movement of the focusing lens in the step 23, then the focusing lens is moved in the opposite direction in a step 24.

*Moving focusing lens:*

As long as the focus-evaluating value increases in a step 26, the focusing lens is continuously moved in the same direction in the step 25.

*Detecting maximum value and stopping moving focusing lens:*

If the focus-evaluating value begins to decrease in the step 26, the focusing lens is moved back slightly and then stopped in a step 27.

The hill-climbing AF control process can be used in a wide range of focusing control applications because it allows rapid AF control operation without adding any new rangefinder device.

The hill-climbing AF control process is based, in principle, on a change in the level of the focus-evaluating value which is brought about when the focusing lens moves. In the event that such a level change of the focus-evaluating value is not recognizable, the hill-climbing AF control process cannot be performed properly. This problem will be discussed in more detail below.

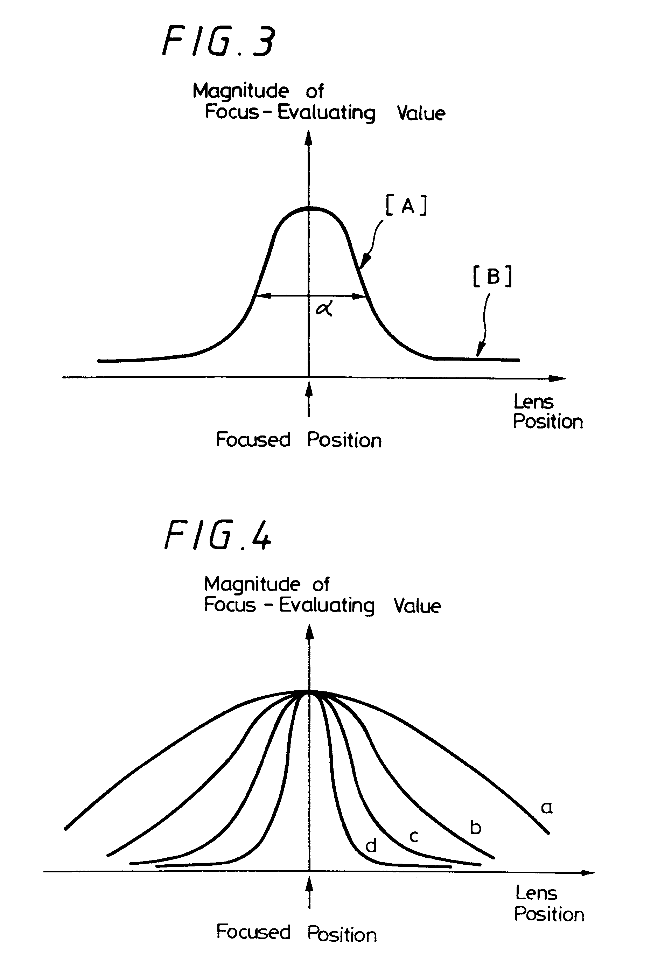

Generally, the relationship between the position of the focusing lens and the magnitude of the focus-evaluating value that is produced by detecting a certain bend component of the output signal from the image pickup device in the conventional hill-climbing AF control system is illustrated in FIG. 3 of the accompanying drawings. As shown in FIG. 3, the relationship is represented by a normal distribution function with its origin at the focused lens position. The focus-evaluating value as it is plotted against the position of the focusing lens is represented by a focus-evaluating value curve.

If the image is not completely out of focus, i.e., if the focusing lens is positioned closely to the focused position as indicated by a steep portion [A] of the focus-evaluating value curve, then the level of the focus-evaluating value varies when the focusing lens is moved only slightly. Therefore, the focus-evaluating value

2

can be increased by controlling the focusing lens to move.

However, if the image is completely defocused, i.e., if the focusing lens is positioned remotely from the focused position as indicated by a flat portion [B] of the focus-evaluating value curve, then the level of the focus-evaluating value does not vary when the focusing lens is moved slightly. As a result, the focus-evaluating value cannot be increased by controlling the focusing lens to move.

FIG. 4 of the accompanying drawings shows the relationship between the position of the focusing lens and the magnitude of the focus-evaluating value with respect to various frequency bands detected. Study of FIG. 4 indicates that focus-evaluating value curves a, b representing focus-evaluating values generated in lower frequency bands are relatively gradual, and that focus-evaluating value curves c, d representing focus-evaluating values generated in higher frequency bands are steep near the focused position, but flat remotely from the focused position.

To be able to perform the AF control process in a wide range of lens positions, therefore, it is necessary to use focus-evaluating values generated in a higher frequency band when the defocus of the image is relatively small, and to use focus-evaluating values generated in a lower frequency band when the defocus of the image is relatively large.

However, such a plurality of characteristic curves of focus-evaluating values can be achieved and the AF control process can be performed based on the plural characteristic curves of focus-evaluating values only by a large-scale hardware and software system.

If an optical system with strict AF control requirements is largely defocused, then random noise is large with respect to a video signal representing a subject and hence focus-evaluating values are poor in quality, making the AF control process unstable. Should the video signal be amplified to such an extent that any change in the level of focus-evaluating values would appear, the amplified video signal would be subjected to camera system noise and noise induced by changes the conditions of the imaged subject, resulting in AF control errors.

Furthermore, when the focus lens is largely moved until any change in the level of focus-evaluating values appears, if the level change is negative, i.e., if the focus lens happens to have been moved in a direction away from the focused position, then the Af control process is unnatural. The hill-climbing AF control process may not be carried out correctly when the focus lens is largely out of focus.

The probability that the AF control process starts from a largely defocused state is higher as the depth of field is smaller, i.e., as the half-width $\alpha$ of the curve shown in FIG. 3 is smaller. The recent trend of video cameras for consumer use is toward higher zoom lens magnifications, particularly a larger focal length at the tele end, with the result that imaged scenes have reduced depths of field. Consequently, the AF control process on such video cameras tends to be frequently initiated from the out-of-focus condition of the focusing lens.

According to the present invention, there is provided an automatic focusing control system comprising an image pickup device for producing image data of a subject, an optical system for varying a relative position thereof with respect to the image pickup device in response to an control signal, means for dividing the image data from the image pickup device into a plurality of frequency bands, means for detecting level changes of image data components in the respective frequency bands before and after the relative focused position on the image pickup device is varied by the optical system, and generating a level change pattern representing the detected level changes, and means for estimating a focused position of the optical system with respect to the image pickup device from the level change pattern.

According to the present invention, there is also provided an automatic focusing control system having an optical system for varying a relative position thereof with respect to an image pickup device in response to a control signal, a microcomputer for estimating a direction toward a focused position of the optical system with respect to the image pickup device based on a high-frequency component of image data from the image pickup device and actuating the optical system based on the estimated direction, and means for decimating the image data from the image pickup device at least in one direction on an image pickup surface of the image pickup device at at least one time or position ratio, and supplying the image data from the image pickup device and the decimated image data to the microcomputer.

According to the present invention, there is further provided an automatic focusing control system having an optical system for varying a relative position thereof with respect to an image pickup device in response to a control signal, a microcomputer for estimating a direction toward a focused position of the optical system with respect to the image pickup device based on a high-frequency component of image data from the image pickup device and actuating the optical system based on the estimated direction, means for decimating the image data from the image pickup device in at least one direction on an image pickup surface of the image pickup device at a predetermined time or position ratio, and supplying the decimated image data to the microcomputer.

Embodiments of the invention described in detail below provide an automatic focusing control system which is capable of reliably automatically focusing an optical system even when it is largely out of focus.

The invention will now be further described, by way of illustrative and non-limiting example, with reference to the accompanying drawings, in which like reference signs represent the same or similar objects throughout, and in which:

FIG. 1 is a block diagram of a previously proposed hill-climbing AF control system;

FIG. 2 is a flowchart of a control sequence of a hill-climbing AF control process carried out by a microcomputer of the previously proposed hill-climbing AF control system;

FIG. 3 is a diagram showing a focus-evaluating value curve which represents the relationship between the position of a focusing lens and the focus-evaluating value;

FIG. 4 is a diagram showing a plurality of focus-evaluating value curves produced in different frequency bands;

FIG. 5 is a block diagram of an AF control system according to a first embodiment of the present invention;

FIG. 6 is a diagram showing filtering characteristics of a filtering circuit of the AF control system shown in FIG. 5;

FIG. 7 is a flowchart of a control sequence of an AF control process carried out by a microcomputer of the AF control system shown in FIG. 5;

FIGS. 8A and 8B are diagrams showing differential vector patterns produced by the AF control system shown in FIG. 5;

FIG. 9 is a block diagram of an AF control system according to a second embodiment of the present invention;

FIG. 10 is a flowchart of a control sequence of an AF control process carried out by a microcomputer of the AF control system shown in FIG. 9;

FIGS. 11A and 11B are diagrams showing differential vector patterns produced by the AF control system shown in FIG. 9;

FIGS. 12A and 12B are diagrams showing count distributions of an incremental vector produced by the AF control system shown in FIG. 9;

FIG. 13 is a flowchart of a control sequence of an AF control process carried out by a microcomputer of an AF control system according to a third embodiment of the present invention;

FIGS. 14A and 14B are diagrams showing differential vector patterns produced by the AF control system according to the third embodiment;

FIG. 15 is a block diagram of an AF control system according to a fourth embodiment of the present invention;

FIG. 16 is a block diagram of a decimating circuit of the AF control system shown in FIG. 15;

FIG. 17 is a diagram showing data timing of the decimating circuit shown in FIG. 16;

FIG. 17A is an enlarged diagram illustrating signal portions indicated at A in FIG. 17;

FIG. 18 is a block diagram of an AF control system according to a fifth embodiment of the present invention; and

FIG. 19 is a flowchart of a decimating process carried out by a signal processor of the AF control system shown in FIG. 18.

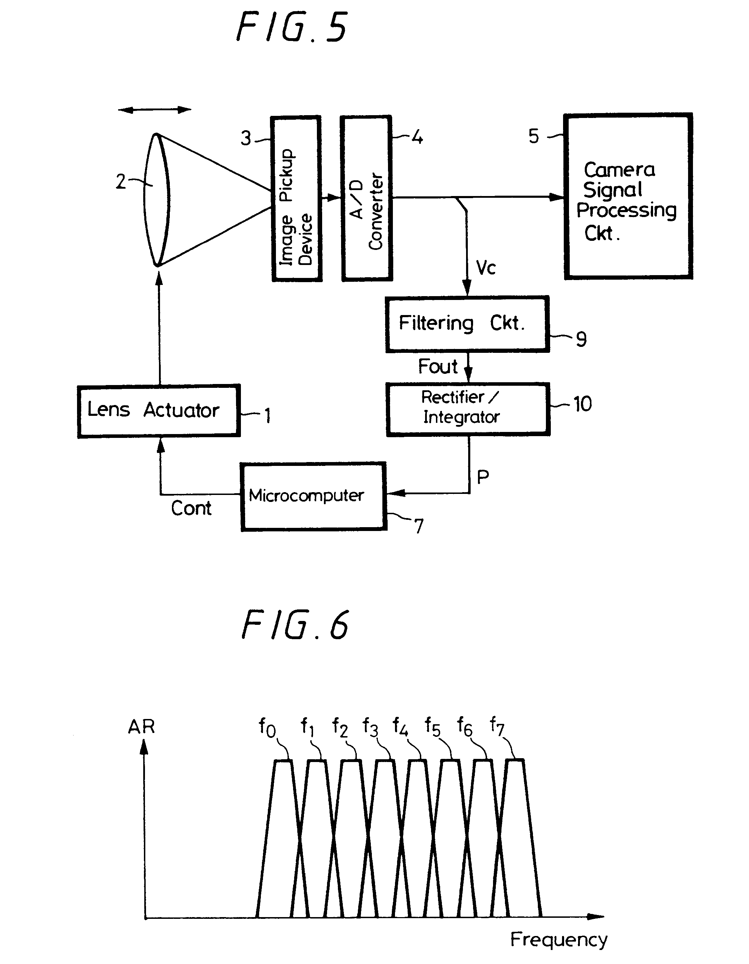

As shown in FIG. 5, an AF control system according to a first embodiment of the present invention has an optical system including a focusing lens 2 for focusing and applying incident light from a subject to an image pickup device 3. The focusing lens 2 is actuated, i.e., moved back and forth, by a lens actuator 1 for focusing on the subject.

The image pickup device 3 produces an output video signal that is pre-processed by a preamplifier or the like (not shown). The video signal is then converted by an A/D converter 4 into a digital video signal Vc, which is supplied to a camera signal processing circuit 5 and also a filtering circuit 9.

The filtering circuit 9 divides the digital video signal Vc into eight frequency bands f0 ~ f7 as shown in FIG. 6, and produces a filtered output signal Fout. The number of frequency bands into which the digital video signal Vc is divided by the filtering circuit 9 is not limited to eight, but may be selected as desired.

The filtered output signal Fout is rectified and then integrated in each of certain areas of a field of image by a rectifier/integrator 10. That is, the rectifier/integrator 10 converts the supplied filtered output signals Fout into a focus-evaluating vector P (p0 ~ p7). The focus-evaluating vector P (p0 ~ p7) is supplied to a microcomputer 7.

The microcomputer 7 generates a lens control signal CONT based on the supplied focus-evaluating vector P (p0 ~ p7) according to a control process described later on, and applies the lens control signal CONT to the lens actuator 1.

In response to the lens control signal CONT, the lens actuator 1 actuates the focusing lens 2 along its optical axis to bring the subject image into focus on the image pickup device 3.

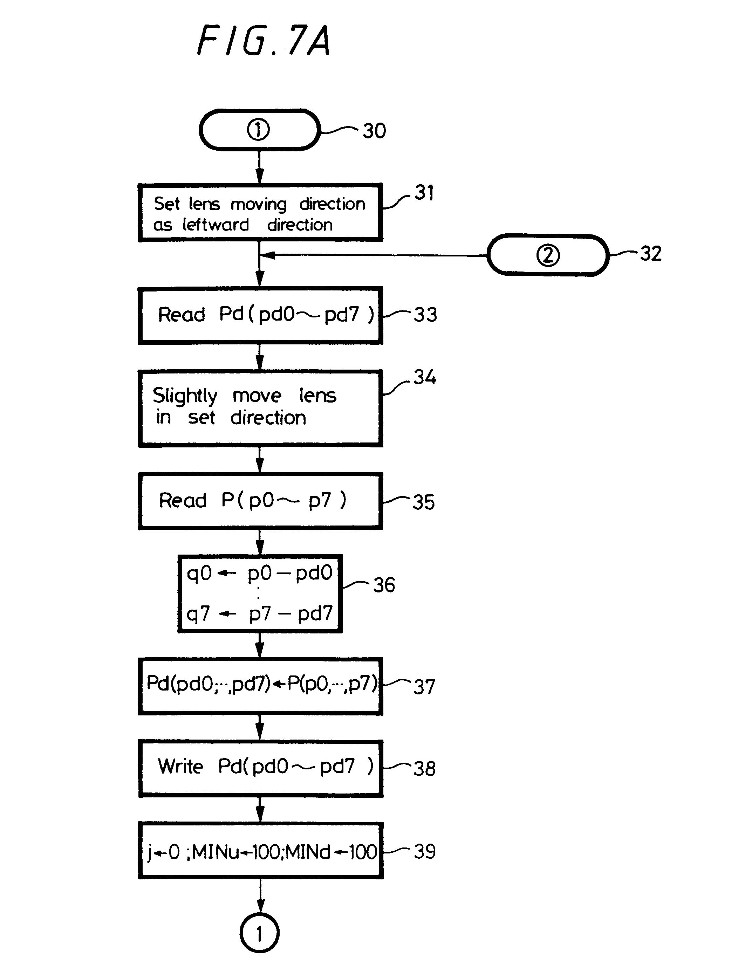

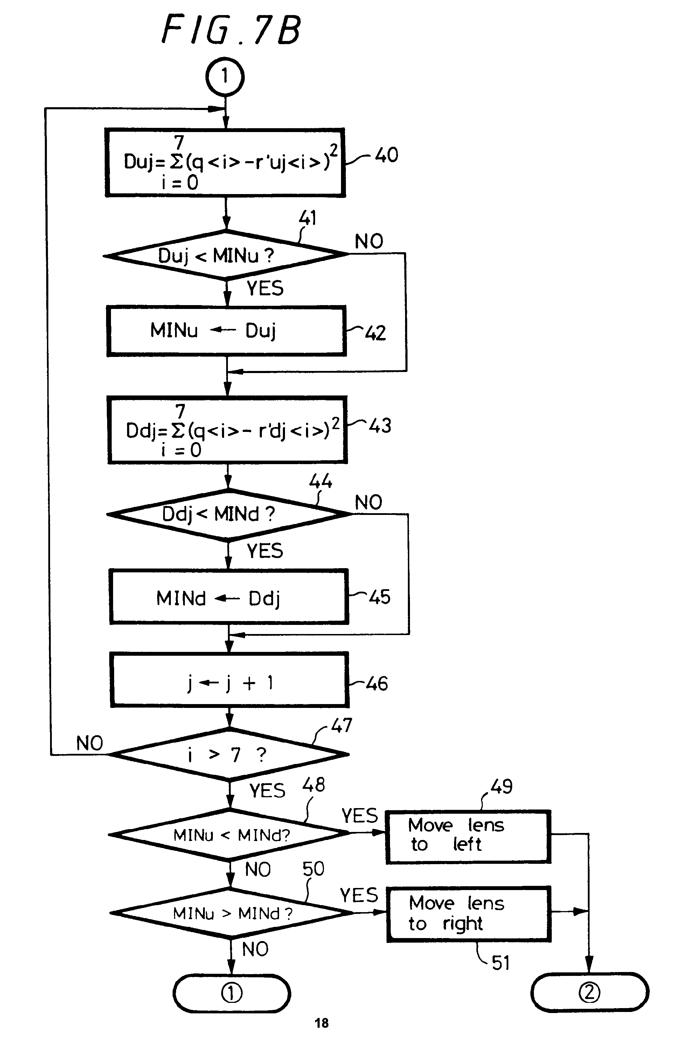

The control process of the microcomputer 7 will now be described in detail with reference to FIG. 7.

When the control process is started in a step 30, the microcomputer 7 establishes a direction in which to move the focusing lens 2 as a leftward direction in a step 31. Therefore, the focusing lens 2 is to be moved to the left, i.e., away from the image pickup device 3, in FIG. 5. Then, the microcomputer 7 reads a focus-evaluating vector Pd (pd0 ~ pd7) produced from a preceding field of image, i.e., before the focusing lens 2 is moved, in a step 33. After slightly moving the focusing lens 2 in the established direction in a step 34, the microcomputer 7 reads a focus-evaluating vector P (p0 ~ p7) from a present field of image in a step 35.

Thereafter, the microcomputer 7 calculates the difference between the focus-evaluating vector P (p0 ~ p7) from the present field of image and the focus-evaluating vector Pd (pd0 ~ pd7) produced from the preceding field of image, thereby producing a differential focus-evaluating vector Q (q0 ~ q7) in a step 36. Therefore, the differential focus-evaluating vector Q (q0 ~ q7) is expressed as follows:

$$Q\ (q0 \sim q7)\ =\ P\ -\ Pd\ =\ (p0\ -\ pd0 \sim p7\ -\ pd7).$$

The focus-evaluating vector Pd (pd0 ~ pd7) produced from the preceding field of image is replaced and updated with the focus-evaluating vector P (p0 ~ p7) from the present field of image in steps 37, 38.

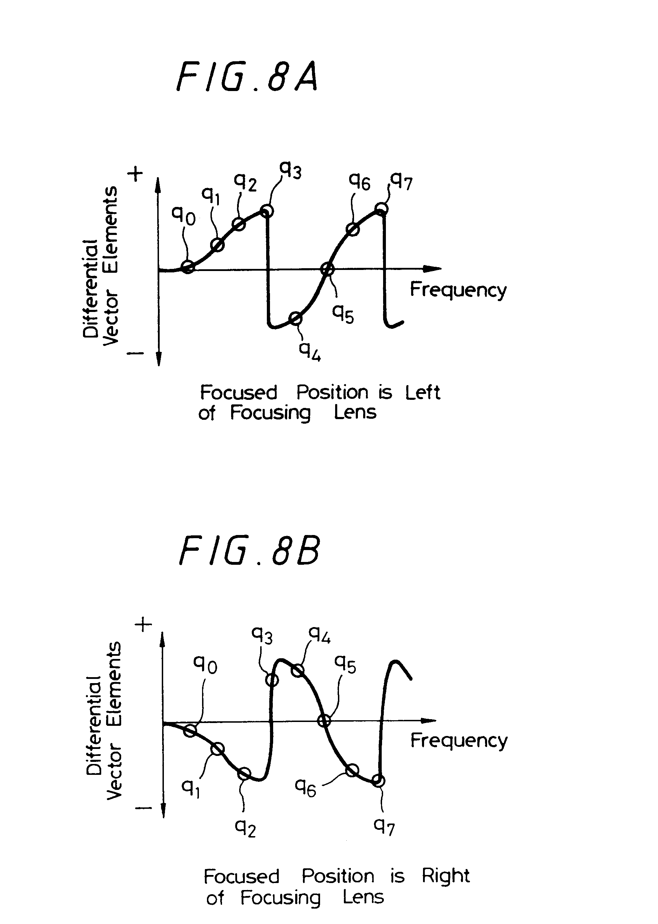

FIGS. 8A and 8B show differential vector patterns representing the elements q0 ~ q7 of the differential focus-evaluating vector Q (q0 ~ q7) that are arranged successively in the frequency bands f0 ~ f7.

As described above with reference to the step 31, the focusing lens 2 is to be moved to the left, i.e., away from the image pickup device 3, in FIG. 5. If the focused position for the focusing lens 2 is on the lefthand side of the focusing lens 2, then the differential vector pattern is a sawtooth pattern with a ramp inclined upwardly as the frequency goes higher as shown in FIG. 8A. Conversely, if the focused position for the focusing lens 2 is on the righthand side of the focusing lens 2, then the differential vector pattern is a sawtooth pattern with a ramp inclined downwardly as the frequency goes higher as shown in FIG. 8B.

On the other hand, if it is assumed that the focusing lens 2 is to be moved to the right, i.e., toward the image pickup device 3, in FIG. 5, then the differential vector patterns are vertically reversed.

Consequently, it is possible to determine the direction in which to move the focusing lens 2 for focusing on the image by finding out whether the sawtooth differential vector pattern has a ramp inclined upwardly or downwardly as the frequency goes higher.

According to this embodiment, a pattern matching process is used to detect whether the sawtooth differential vector pattern has a ramp inclined upwardly or downwardly as the frequency goes higher. However, the present invention is not to be limited to such a pattern matching process.

It is assumed that the sawtooth differential vector patterns with respective ramps inclined upwardly and downwardly as the frequency goes higher have reference vectors represented by Ru, Rd, respectively, and that shifted reference vectors Ru'j, Rd'j (j = 0 ~ n) due to n shifted matrices ([A0] ~ An]) shifted from the reference vectors Ru, Rd are indicated by:

Ru'j = [Ad]·Ru,
Rd'j = [Ad]·Rd
([Aj]: jth shifted matrix).

In a step 39, various variables j, MINu, MINd are set to 1, 100, 100, respectively.

In steps 40, 43, the microcomputer 7 calculates squared distances Duj, Ddj between the differential focus-evaluating vector Q and the shifted reference vectors Ru'j, Rd'j as follows:

$$Duj\ =\ |Q\ -\ Ru'j|^2\ =\ \sum_{i=0}^{7}(q{<}i{>}\ -\ ru'j{<}i{>})^2$$

$$Ddj\ =\ |Q\ -\ Rd'j|^2\ =\ \sum_{i=0}^{7}(q{<}i{>}\ -\ rd'j{<}i{>})^2.$$

In steps 41, 44, the microcomputer 7 determines whether the squared distances Duj, Ddj are smaller than respective minimum values MINu, MINd therefor. These minimum values MINu, MINd are defined as follows:

MINu = min(Du0 ~ Dun),
MINd = min(Dd0 ~ Ddn).

If smaller, then the squared distances Duj, Ddj are set to the respective minimum values MINu, MINd in respective steps 42, 45.

In a step 46, the variable j is incremented by 1.

The microcomputer 7 determines in a step 47 whether the variable j is larger than 7 or not. That is, the steps 39 through 46 are looped eight times because the differential focus-evaluating vector Q is determined in each of the eight frequency bands.

Depending on the magnitudes of the minimum values MINu, MINd, the microcomputer 7 controls the fo-

EP 0 566 307 A2

cusing lens 2 as follows:

If the minimum value MINu is smaller than the minimum value MINd in a step 48, then since the focused position is positioned on the lefthand side of the focusing lens 2, the focusing lens 2 is moved to the left in a step 49.

If the minimum value MINu is larger than the minimum value MINd in a step 50, then since the focused position is positioned on the righthand side of the focusing lens 2, the focusing lens 2 is moved to the right in a step 51.

If the minimum value MINu is equal to the minimum value MINd, then since the focused position is not determined with respect to the focusing lens 2, the focusing lens 2 is not moved.

In this manner, the microcomputer 7 determines the direction in which to move the focusing lens 2, and generates the lens control signal CONT.

According to the first embodiment shown in FIGS. 5 to 7, the focusing lens 2 can be automatically focused on the image even when it is largely out of focus, a condition which the previously proposed AF control system cannot properly operate to eliminate.

The focus-evaluating vector P (p0 $\sim$ p7) generated by the rectifier/integrator 10 contains elements of a subject spectrum. It is now assumed that the subject spectrum averaged over the eight frequency bands f0 $\sim$ f7 is represented by S (s0 $\sim$ s7), and defocus characteristics due to a defocused condition is represented by T (t0 $\sim$ t7).

The focus-evaluating vector P can be expressed by the inner product of S and T, and the differential focus-evaluating vector Q by the inner product of S and a true differential focus-evaluating vector Q' as follows:

$$P = S{\cdot}T = (s0{\cdot}t0 \sim s7{\cdot}t7),$$
$$Q = S{\cdot}Q' = (s0{\cdot}q'0 \sim s7{\cdot}q'7).$$

Therefore, if the subject spectrum W suffers a large deviation, then though the differential vector pattern remains unchanged in its tendency, the differential focus-evaluating vector is varied, resulting in a possible error with the pattern matching process according to the first embodiment described above.

According to a second embodiment of the present invention, an AF control system is designed to reduce the influence of a subject spectrum.

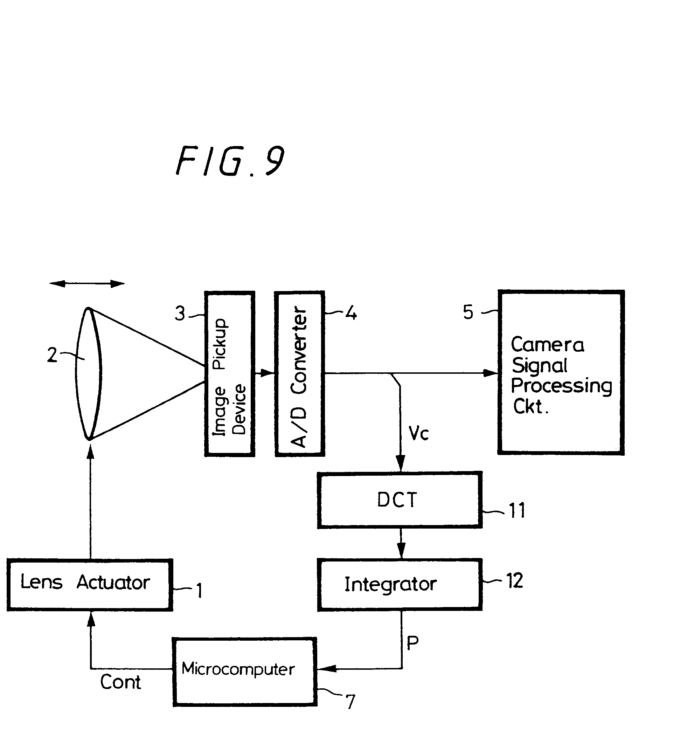

FIG. 9 shows the AF control system according to the second embodiment of the present invention. Those parts shown in FIG. 9 which are identical to those of the AF control system according to the first embodiment are denoted by identical reference numerals.

Incident light from a subject is focused and applied to an image pickup device 3 by an optical system including a focusing lens 2. The focusing lens 2 is actuated by a lens actuator 1 for focusing on the subject.

The image pickup device 3 produces an output video signal that is pre-processed by a preamplifier or the like (not shown). The video signal is then converted by an A/D converter 4 into a digital video signal Vc, which is supplied to a camera signal processing circuit 5 and also an orthogonal transformation circuit 11 which comprises a DCT (discrete cosine transform) circuit.

The orthogonal transformation circuit 11 effects a two-dimensional discrete cosine transform on an output signal from a set of eight pixels of the image pickup device 3. More specifically, if an output signal from an Nth set of eight pixels of the image pickup device 3 is represented by In (i0 $\sim$ i7) and an 8 x 8 discrete cosine transform matrix is represented by [D], then the orthogonal transformation circuit 11 produces a output signal On (o0 $\sim$ o7) expressed as:

$$On = [D]t{\cdot}In$$

where t indicates transposition.

The output signal On is converted into an absolute value, and then integrated in each of certain areas of a field of image by an integrator 12. That is, the integrator 12 produces a focus-evaluating vector P (p0 $\sim$ p7) which is indicated by the following equation:

$$P = (\sum_{j} |o_j 0| \sim \sum_{j} |o_j 7|)$$

The focus-evaluating vector P (p0 $\sim$ p7) is supplied to a microcomputer 7.

The microcomputer 7 generates a lens control signal CONT based on the supplied focus-evaluating vector P (p0 $\sim$ p7) according to a control process described later on, and applies the lens control signal CONT to the lens actuator 1.

In response to the lens control signal CONT, the lens actuator 1 actuates the focusing lens 2 along its optical axis to bring the subject image into focus on the image pickup device 3.

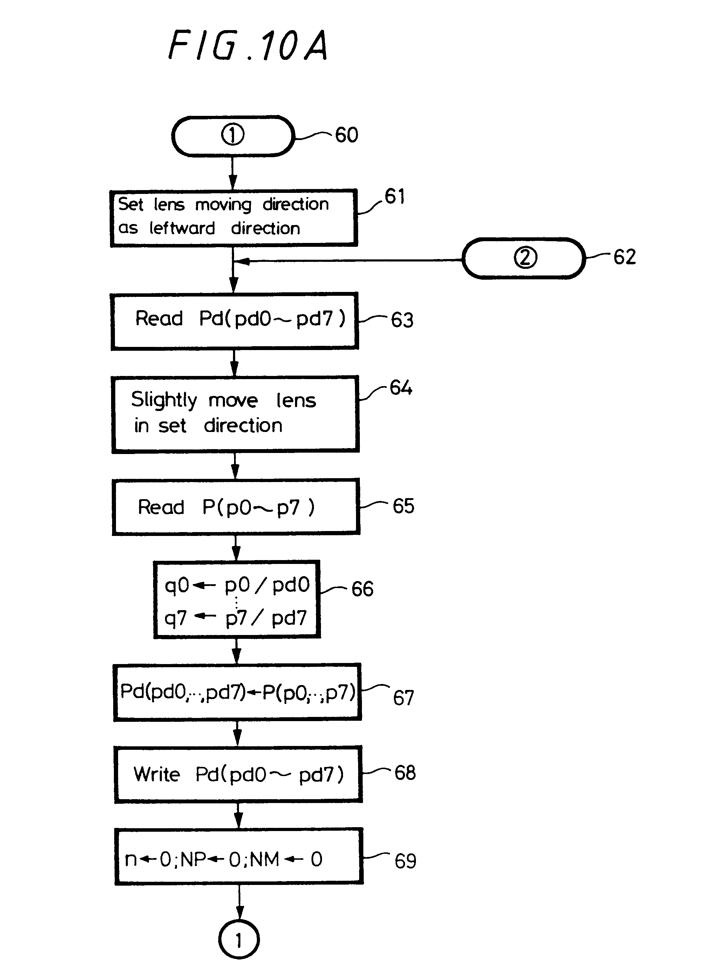

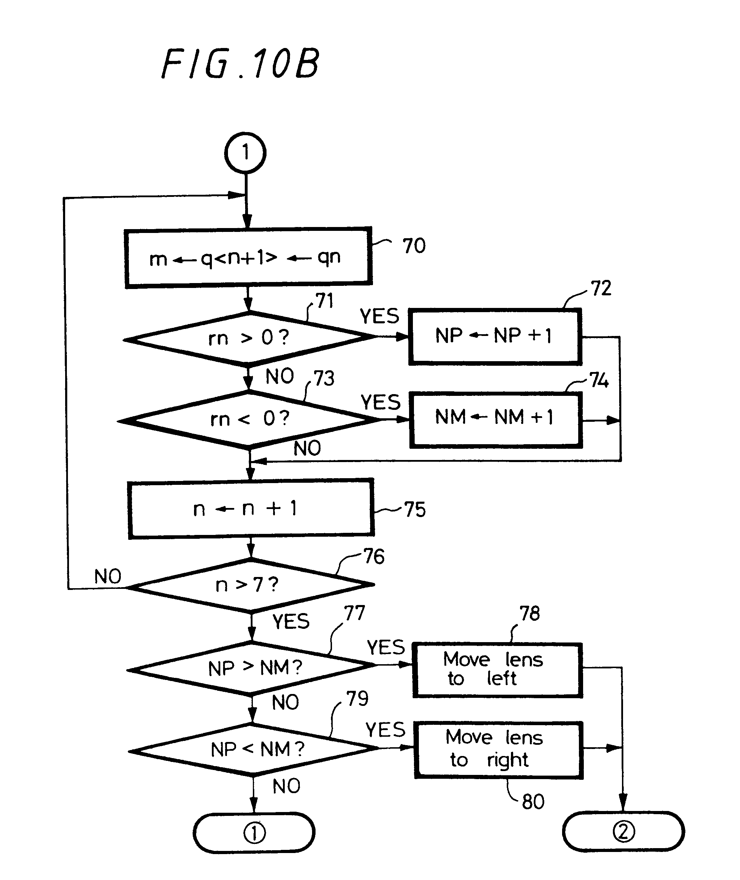

The control process of the microcomputer 7 shown in FIG. 9 will now be described in detail with reference

6

to FIG. 10.

When the control process is started in a step 60, the microcomputer 7 establishes a direction in which to move the focusing lens 2 as a leftward direction in a step 61. Therefore, the focusing lens 2 is to be moved to the left, i.e., away from the image pickup device 3, in FIG. 9. Then, the microcomputer 7 reads a focus-evaluating vector Pd (pd0 $\sim$ pd7) produced from a preceding field of image, i.e., before the focusing lens 2 is moved, in a step 63. After slightly moving the focusing lens 2 in the established direction in a step 64, the microcomputer 7 reads a focus-evaluating vector P (p0 $\sim$ p7) from a present field of image in a step 65.

Thereafter, the microcomputer 7 calculates the ratio per element between the focus-evaluating vector P from the present field of image and the focus-evaluating vector Pd produced from the preceding field of image, thereby producing a focus-evaluating value ratio vector Q (q0 $\sim$ q7) in a step 66.

The focus-evaluating vector Pd (pd0 $\sim$ pd7) produced from the preceding field of image is replaced and updated with the focus-evaluating vector P (p0 $\sim$ p7) from the present field of image in steps 67, 68.

The calculations to determine the ratio in the step 66 are carried out for the following reasons:

If a subject spectrum is represented by S (s0 $\sim$ s7), and defocus characteristics due to a defocused condition is represented by T (t0 $\sim$ t7), then the focus-evaluating vector P can be expressed by the inner product of S and T as follows:

$$P = S \cdot T = (s0 \cdot t0 \sim s7 \cdot t7).$$

Similarly, if defocus characteristics due to a defocused condition is represented by T (td0 $\sim$ td7), then the focus-evaluating vector Pd can be expressed by the inner product of S and Td as follows:

$$Pd = S \cdot Td = (s0 \cdot td0 \sim s7 \cdot td7).$$

Therefore, the ratio per element between the focus-evaluating vector P and the focus-evaluating vector Pd is free from the elements of the subject spectrum S (s0 $\sim$ s7), as indicated below.

$$Q = (t0/td0 \sim t7/td7).$$

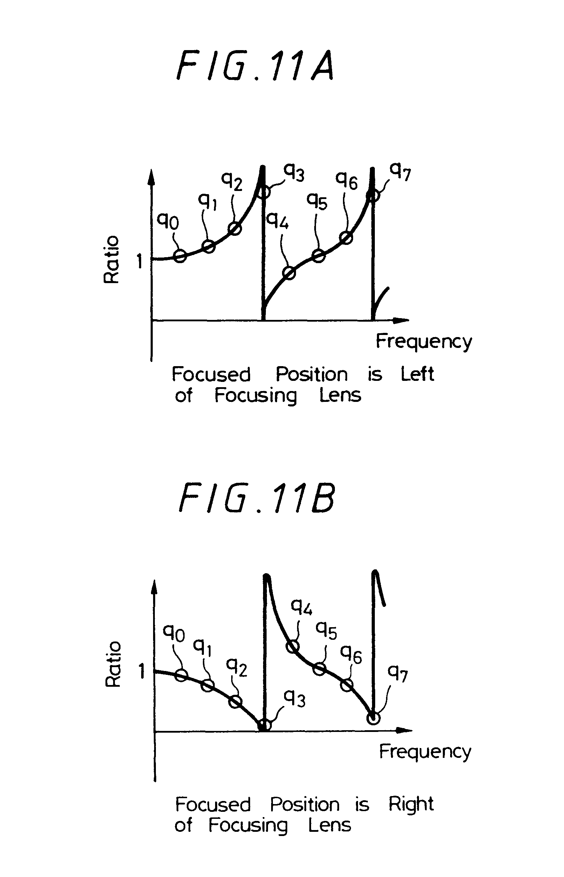

FIGS. 11A and 11B show ratio vector patterns representing the elements q0 $\sim$ q7 of the focus-evaluating ratio vector Q (q0 $\sim$ q7) that are arranged successively in the frequency bands f0 $\sim$ f7.

As described above with reference to the step 61, the focusing lens 2 is to be moved to the left, i.e., away from the image pickup device 3, in FIG. 9. If the focused position for the focusing lens 2 is on the lefthand side of the focusing lens 2, then the ratio vector pattern is a sawtooth pattern with a ramp inclined upwardly as the frequency goes higher as shown in FIG. 11A. Conversely, if the focused position for the focusing lens 2 is on the righthand side of the focusing lens 2, then the ratio vector pattern is a sawtooth pattern with a ramp inclined downwardly as the frequency goes higher as shown in FIG. 11B.

On the other hand, if it is assumed that the focusing lens 2 is to be moved to the right, i.e., toward the image pickup device 3, in FIG. 9, then the ratio vector patterns are vertically reversed.

Consequently, it is possible to determine the direction in which to move the focusing lens 2 for focusing on the image by finding out whether the sawtooth differential vector pattern has a ramp inclined upwardly or downwardly as the frequency goes higher.

According to the second embodiment, a pattern gradient identifying process is used to detect whether the sawtooth differential vector pattern has a ramp inclined upwardly or downwardly as the frequency goes higher.

The elements of the focus-evaluating ratio vector Q (q0 $\sim$ q7) are arranged in a frequency order if a suitable discrete cosine transform matrix [D] is selected.

An incremental vector R (r0 $\sim$ r6) for giving increments to the elements of the focus-evaluating ratio vector Q (q0 $\sim$ q7) is expressed as:

$$R (r0 \sim r6) = (q1 - q0 \sim q7 - q6).$$

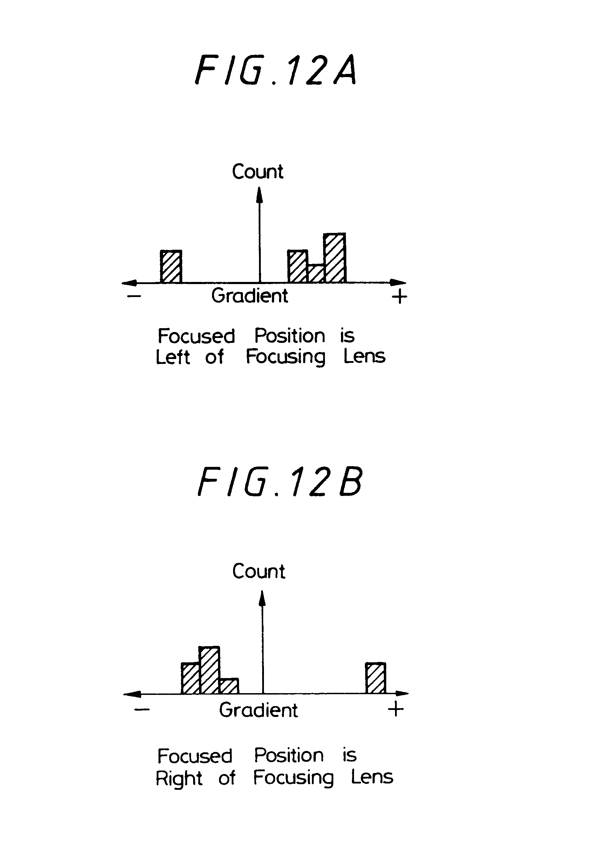

FIGS. 12A and 12B show count distributions of the incremental vector R.

As described above, if the focused position for the focusing lens 2 is on the lefthand side of the focusing lens 2, then the ratio vector pattern is a sawtooth pattern with a ramp inclined upwardly as the frequency goes higher as shown in FIG. 11A. Therefore, except discrete points, the elements rn of the incremental vector R are positive on a gradient axis, and most element counts are positive as shown in FIG. 12A. Conversely, if the focused position for the focusing lens 2 is on the righthand side of the focusing lens 2, then the ratio vector pattern is a sawtooth pattern with a ramp inclined downwardly as the frequency goes higher as shown in FIG. 11B. Therefore, except discrete points, the elements rn of the incremental vector R are negative on a gradient axis, and most element counts are negative as shown in FIG. 12B.

Accordingly, it is possible to determine whether the sawtooth differential vector pattern has a ramp inclined upwardly or downwardly as the frequency goes higher, and hence the direction in which to move the focusing lens 2 for focusing on the image, by counting positive and negative elements of the incremental vector.

In FIG. 10, variables n, NP, NM are set to 0 in a step 69. The variable NP is the count of positive elements of the incremental vector, and the variable NM is the count of negative elements of the incremental vector. In a step 70, rn is set to q <n + 1>, which is set to qn. If rn > 0 in a step 71, the count NP is incremented by 1 in

EP 0 566 307 A2

a step 72. If rn < 0 in a step 73, then the count NM is incremented by 1 in a step 74. Then, n is incremented by 1 in a step 75.

The microcomputer 7 determines in a step 76 whether the variable n is larger than 7 or not. That is, the steps 70 through 75 are looped eight times.

Thereafter, depending on the magnitudes of the counts NP, NM, the microcomputer 7 controls the focusing lens 2 as follows:

If the count NP is greater than the count NM in a step 77, then since the focused position is positioned on the lefthand side of the focusing lens 2, the focusing lens 2 is moved to the left in a step 78.

If the count NP is smaller than the count NM in a step 79, then since the focused position is positioned on the righthand side of the focusing lens 2, the focusing lens 2 is moved to the right in a step 80.

If the count NP is equal to the count NM, then since the focused position is not determined with respect to the focusing lens 2, the focusing lens 2 is not moved.

In this manner, the microcomputer 7 determines the direction in which to move the focusing lens 2, and generates the lens control signal CONT.

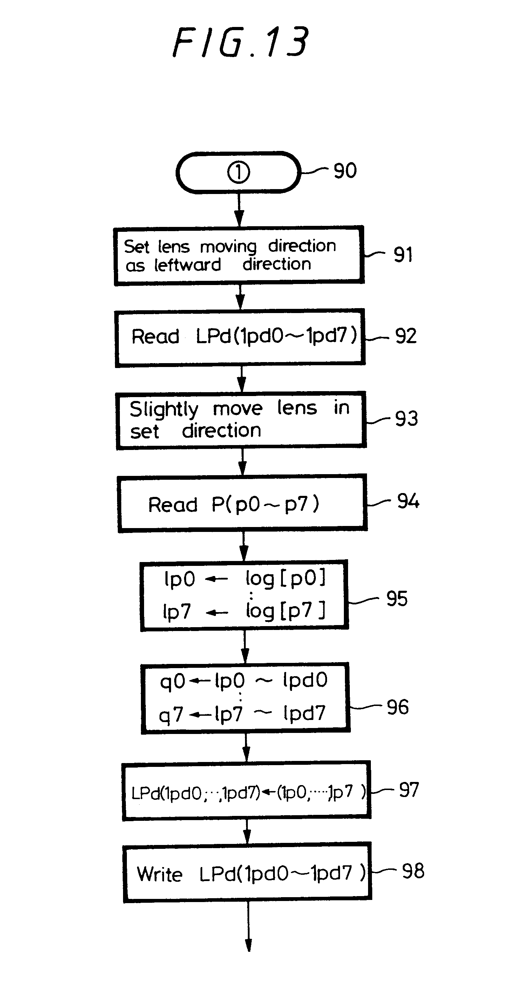

FIG. 13 shows a control sequence of an AF control process carried out by a microcomputer of an AF control system according to a third embodiment of the present invention. The AF control system according to the third embodiment is identical to the AF control system according to the first embodiment which is shown in FIG. 5.

As described above with reference to FIG. 5, incident light from a subject is focused and applied to an image pickup device 3 by an optical system including a focusing lens 2. The focusing lens 2 is actuated by a lens actuator 1 for focusing on the subject.

The image pickup device 3 produces an output video signal that is pre-processed by a preamplifier or the like (not shown). The video signal is then converted by an A/D converter 4 into a digital video signal Vc, which is supplied to a camera signal processing circuit 5 and also a filtering circuit 9.

The filtering circuit 9 divides the digital video signal Vc into eight frequency bands f0 ~ f7 as shown in FIG. 6, and produces a filtered output signal Fout. The number of frequency bands into which the digital video signal Vc is divided by the filtering circuit 9 is not limited to eight, but may be selected as desired.

The filtered output signal Fout is rectified and then integrated in each of certain areas of a field of image by a rectifier/integrator 10. That is, the rectifier/integrator 10 converts the supplied filtered output signals Fout into a focus-evaluating vector P (p0 ~ p7). The focus-evaluating vector P (p0 ~ p7) is supplied to a microcomputer 7.

The microcomputer 7 generates a lens control signal CONT based on the supplied focus-evaluating vector P (p0 ~ p7) according to a control process described later on, and applies the lens control signal CONT to the lens actuator 1.

In response to the lens control signal CONT, the lens actuator 1 actuates the focusing lens 2 along its optical axis to bring the subject image into focus on the image pickup device 3.

The control process of the microcomputer 7 according to the third embodiment will now be described in detail with reference to FIG. 13.

When the control process is started in a step 90, the microcomputer 7 establishes a direction in which to move the focusing lens 2 as a leftward direction in a step 91. Therefore, the focusing lens 2 is to be moved to the left, i.e., away from the image pickup device 3, in FIG. 5. Then, the microcomputer 7 reads a focus-evaluating vector Pd (pd0 ~ pd7) produced from a preceding field of image, i.e., before the focusing lens 2 is moved, in a step 92. After slightly moving the focusing lens 2 in the established direction in a step 93, the microcomputer 7 reads a focus-evaluating vector P (p0 ~ p7) from a present field of image in a step 94.

Thereafter, the microcomputer 7 converts the elements of the focus-evaluating vector P (p0 ~ p7) from the present field of image into their logarithms, thereby producing a logarithmic focus-evaluating vector LP (lp0 ~ lp7) in a step 95. The logarithmic focus-evaluating vector LP (lp0 ~ lp7) is expressed as follows:
$$LP \ (lp0 \sim lp7) \ = \ (\log[p0] \sim \log[p7]).$$

Then, the microcomputer 7 calculates the difference between the logarithmic focus-evaluating vector LP (lp0 ~ lp7) and the logarithmic focus-evaluating vector LPd (lpd0 ~ lpd7) produced from the preceding field of image, thereby producing a differential focus-evaluating vector Q (q0 ~ q7) in a step 96. Therefore, the differential focus-evaluating vector Q (q0 ~ q7) is expressed as follows:
$$Q \ (q0 \sim q7) \ = \ LP \ - \ LPd \ = \ (lp0 \ - \ lpd0 \sim lp7 \ - \ lpd7).$$

The logarithmic focus-evaluating vector LPd (lpdo ~ lpd7) produced from the preceding field of image is replaced and updated with the logarithmic focus-evaluating vector LP (lp0 ~ lp7) from the present field of image in steps 97, 98.

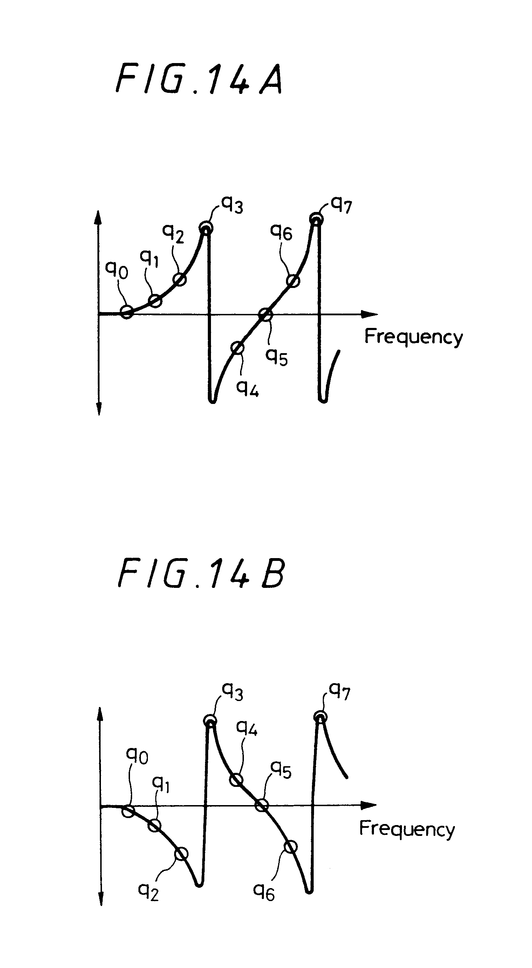

FIGS. 14A and 14B show differential vector patterns representing the elements q0 ~ q7 of the differential focus-evaluating vector Q (q0 ~ q7) that are arranged successively in the frequency bands f0 ~ f7.

As described above with reference to the step 91, the focusing lens 2 is to be moved to the left, i.e., away

8

from the image pickup device 3, in FIG. 5. If the focused position for the focusing lens 2 is on the lefthand side of the focusing lens 2, then the differential vector pattern is a tangential function pattern with a ramp inclined upwardly as the frequency goes higher as shown in FIG. 14A. Conversely, if the focused position for the focusing lens 2 is on the righthand side of the focusing lens 2, then the differential vector pattern is a tangential function pattern with a ramp inclined downwardly as the frequency goes higher as shown in FIG. 14B.

On the other hand, if it is assumed that the focusing lens 2 is to be moved to the right, i.e., toward the image pickup device 3, in FIG. 5, then the differential vector patterns are vertically reversed.

Therefore, it is possible to determine the direction in which to move the focusing lens 2 for focusing on the image by finding out whether the tangential differential vector pattern has a ramp inclined upwardly or downwardly as the frequency goes higher.

The pattern matching process according to the first embodiment of the pattern gradient identifying process according to the second embodiment may be used to detect whether the tangential differential vector pattern has a ramp inclined upwardly or downwardly as the frequency goes higher.

The filtering circuit 9 shown in FIG. 5 may filter the supplied signal vertically or in other directions rather than horizontally, and may be expanded into a two-dimensional configuration.

In the third embodiment, the elements of the focus-evaluating vector may be converted into their logarithms after being integrated, or may be partially integrated, then converted into their logarithms, and thereafter integrated.

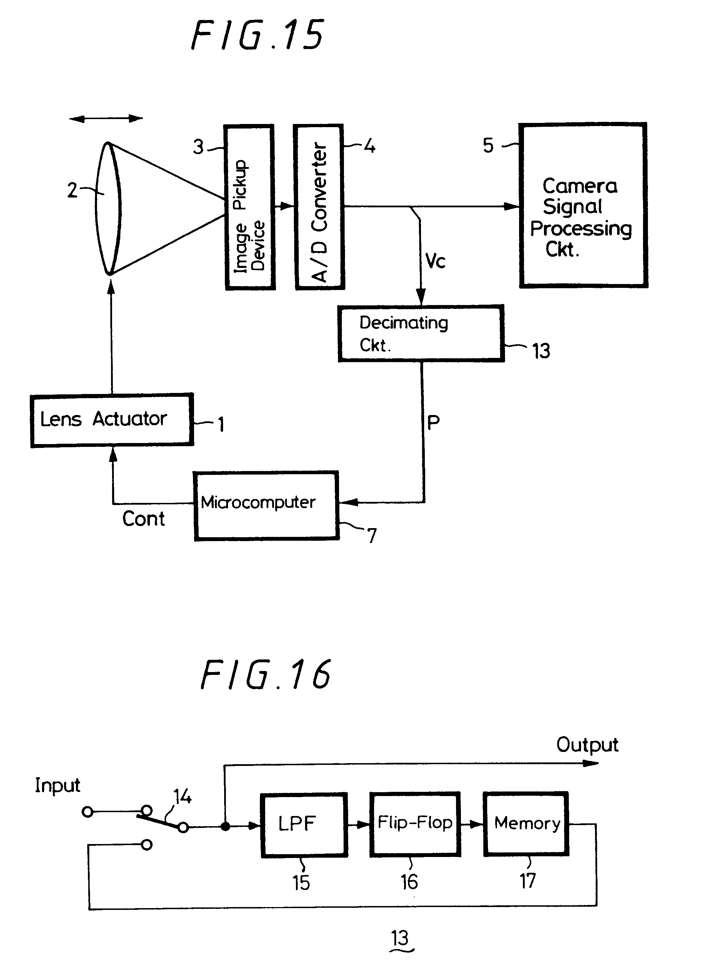

FIG. 15 shows an AF control system according to a fourth embodiment of the present invention.

The AF control system shown in FIG. 15 has a lens actuator 1, an optical system including a focusing lens 2, an image pickup device 3, an A/D converter 4, a camera signal processing circuit 5, and a microcomputer 7 which are identical to those shown in FIG. 5. The AF control system also has a decimating circuit 13 which is supplied with a digital video signal Vc from the A/D converter 4.

The decimating circuit 13 decimates image data and produces a multiplex signal with different time (position) compression ratios. The multiplex signal is supplied to the microcomputer 7 which estimates a direction in which to move the focusing lens 2 to focus on the subject. The microcomputer 7 generates a suitable focus-evaluating value from the supplied multiplex signal to determine the focusing direction in the same manner as the hill-climbing AF control process, and then controls the lens actuator 1 to actuate the focusing lens 2.

FIG. 16 shows the decimating circuit 13 in detail. In FIG. 16, the image data which has been converted into digital image data at a sampling frequency fs by the A/D converter 4 is supplied through a switch 14 to a low-pass filter 15, which limits the frequency band of the image data, i.e., blocks signal components of frequencies higher than fs/4. The image data from the low-pass filter 15 is then decimated to 1/2 by a flip-flop 16, and the decimated image data is stored in a memory 17.

The stored image data is then read out of the memory 17 at the sampling frequency fs, and supplied through the switch 14 again to the low-pass filter 15 which limits the frequency band of the supplied image data. The image data is decimated again to 1/2 by the flip-flop 16, and then stored in the memory 17.

The above process in the decimating circuit 13 is recurrently repeated a number of times that is determined by a defocus amount estimating process (described later on).

The signal applied to the low-pass filter 15 or the output signal from the memory 17 is also applied to the microcomputer 7.

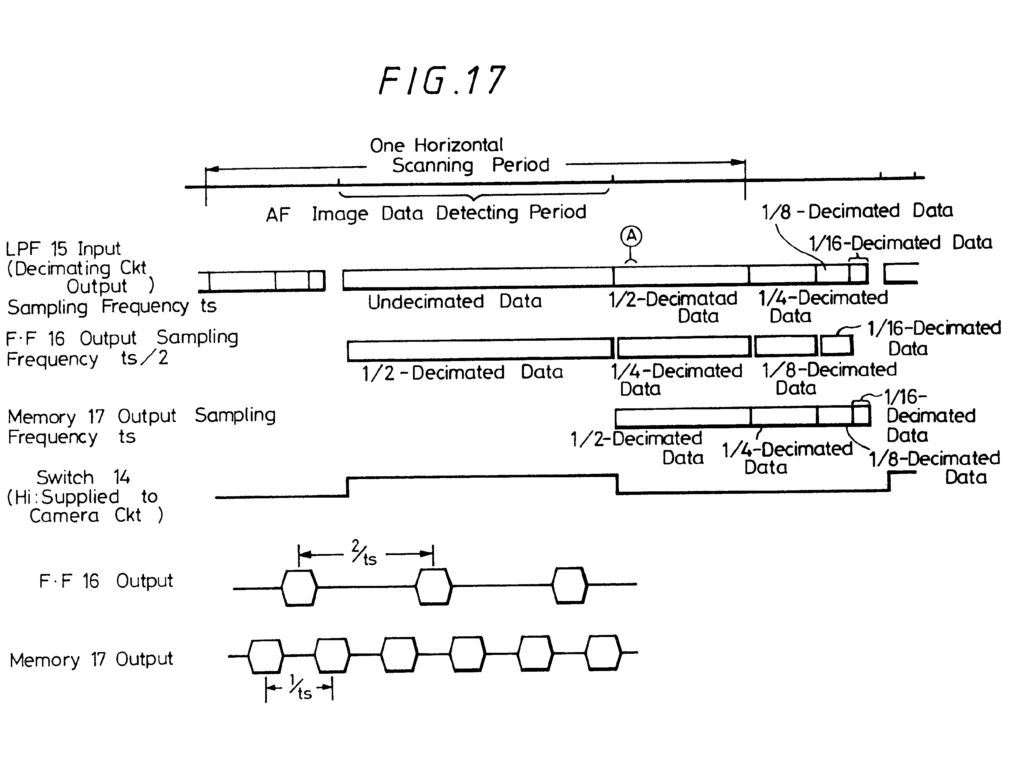

The timing relationship between the video signal and the decimated image data is shown in FIGS. 17 and 17A.

For example, it is assumed that the image pickup device 3 has 768 effective pixels and the low-pass filter 15 has five taps. From the input terminal of the low-pass filter 15, there are successively produced:

Data 1: Undecimated data, the number of data: 461;

Data 2: Data decimated to 1/2, the number of data: 229;

Data 3: Data decimated to 1/4, the number of data: 113;

Data 4: Data decimated to 1/8, the number of data: 55;

Data 5: Data decimated to 1/16, the number of data: 26.

The output image data from the decimating circuit 13 are supplied together to a high-pass filter (not shown) having a cutoff frequency fc.

If the cutoff frequency of the high-pass filter with respect to the undecimated data is fc and the drive frequency for the image pickup device 3 is fs, then the data 1 ~ 5 outputted from the high-pass filter have respective frequency bands given below:

Data 1: fc ~ fs/2;

Data 2: fc/2 ~ fs/4;

Data 3: fc/4 ~ fs/8;

Data 4: fc/8 ~ fs/16;

Data 5: fc/16 ~ fs/32.

The output image data from the high-frequency filter are supplied to the microcomputer 7, which determines maximum values t1, t2, t3, t4, t5 of the absolute values of the supplied image data.

The determined maximum values t1, t2, t3, t4, t5 and those maximum values t1, t2, t3, t4, t5 that are obtained from other scanned signals are averaged into focus-evaluating values T1, T2, T3, T4, T5.

The microcomputer 7 determines the differences between focus-evaluating values Ta1, Ta2, Ta3, Ta4, Ta5 that are produced before the focusing lens 2 is slightly moved along the optical axis and focus-evaluating values Tb1, Tb2, Tb3, Tb4, Tb5 that are produced after the focusing lens 2 is slightly moved along the optical axis, thereby producing differential values D1, D2, D3, D4, D5 (Dn = Tan - Tbn; n = 1 ~ 5).

These differential values D1, D2, D3, D4, D5 are compared and selected according to the following rules:

Rule 1: n associated with greater focus-evaluating values Tan, Tbn (n = 1 ~ 5) is selected;

Rule 2: n associated with a greater differential value is selected;

Rule 3: n = 5 if the magnitudes of the focus-evaluating values are equal to or less than a threshold value.

Based on the selected differential value, the microcomputer 7 determines the direction in which to move the focusing lens 2 according to the conventional AF control process. More specifically,

if $Dn \geqq 0$, then the focusing lens 2 is moved in the same direction; and

if $Dn < 0$, then the focusing lens 2 is moved in the opposite direction.

In the fourth embodiment, therefore, focus-evaluating values in a plurality of frequency bands can simultaneously be produced using the same decimating circuit 13 for thereby widening the range of AF control operation.

Since the image data are limited to certain frequency bands required, the AF control system is subject to less random noise which would otherwise make the AF control process unstable. Consequently, the AF control process can be performed even when the optical system is largely brought out of focus.

In the above fourth embodiment, the maximum size of an image data detecting area for AF control corresponds to 1/2 of one horizontal scanning period (about 60 % of the effective image pickup area). The image data detecting area may be increased when two decimating circuits are used and image data are processed by a line sequential system.

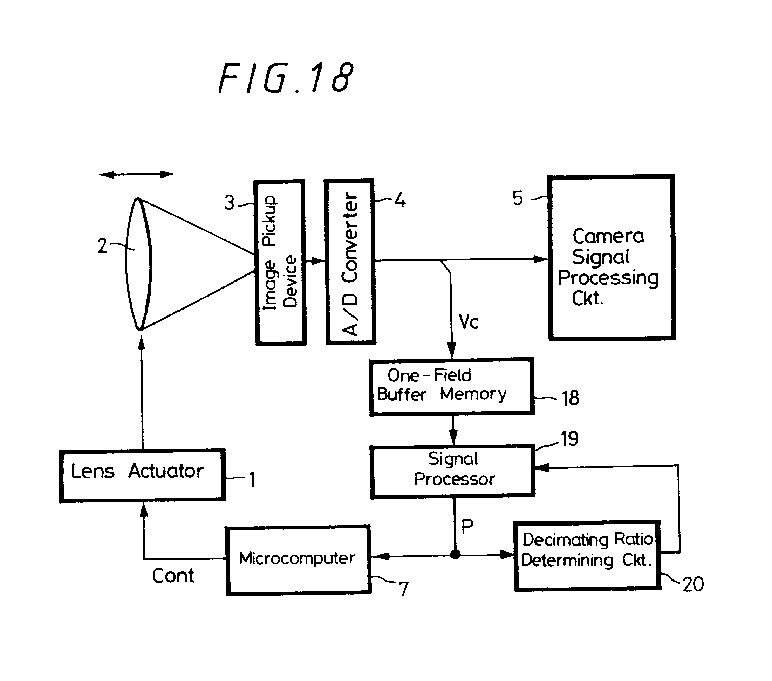

FIG. 18 shows an AF control system according to a fifth embodiment of the present invention, the AF control system including a signal processor for two-dimensionally decimating image data according to a software-implemented control process.

Those parts shown in FIG. 18 which are identical to those of the fourth embodiment are denoted by identical reference numerals.

The digital video signal Vc from the A/D converter 4 is temporarily stored in a one-field buffer memory 18. The image data read from the one-field buffer memory 18 is decimated horizontally (i.e., in a main scanning direction) and vertically (i.e., in an auxiliary scanning direction) on an image pickup surface of the image pickup device 3 at a predetermined decimating ratio, and the decimated image data is supplied to the microcomputer 7 and a decimating ratio determining circuit 20.

The microcomputer 7 controls the lens actuator 1 to actuate the focusing lens 2 in the same manner as with the fourth embodiment.

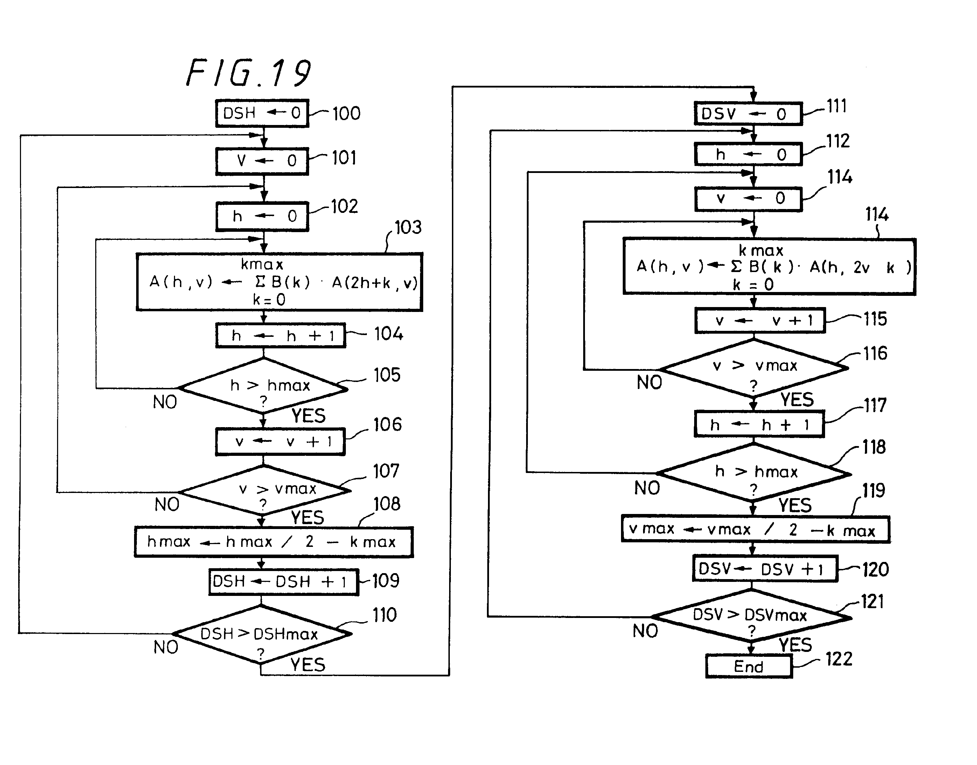

FIG. 19 shows a decimating process carried out by the signal processor 19 of the AF control system shown in FIG. 18.

As shown in FIG. 19, after initializing steps 100, 101, 102, the image data stored in the one-field buffer memory 18 is supplied to a low-pass filter with (kmax + 1) taps whose characteristics are the same as the low-pass filter 15 of the fourth embodiment, and horizontally decimated to 1/2 thereby, and the decimated image data are stored in the one-field buffer memory 18 on a first-in first-out basis in a step 103. The step 103 is executed in each horizontal scanning period (see steps 104, 105). As a result, the image data that has been decimated to half in the horizontal direction is stored in the one-field buffer memory 18.

The above horizontal decimating loop is repeated a number of times DSH determined by the decimating ratio determining circuit 20, thus producing a signal that has been horizontally decimated at a predetermined decimating ratio (see steps 106 ~ 110).

The image data is also decimated in the vertical direction in steps 111 ~ 121. As a consequence, there is produced a signal that has been horizontally and vertically decimated at predetermined decimating ratios. The decimated signal is then supplied to the microcomputer 7 and the decimating ratio determining circuit 20.

Based on the supplied decimated signal, the microcomputer 7 controls the lens actuator 1 to move the focusing lens 2 according to the conventional hill-climbing AF control process.

The decimating ratio determining circuit 20 determines the number of times DSH that the image data is to be decimated based on a focus-evaluating value P or the decimated signal from the signal processor 19 and a differential value between focus-evaluating values before and after the focusing lens 2 is slightly moved.

More specifically, if the focus-evaluating value is smaller than a predetermined value A, then the number of times DSH that the image data is to be decimated is incremented by 1. If the focus-evaluating value is equal to or larger than a predetermined value A, or the ratio of the differential value to the focus-evaluating value is smaller than a predetermined value B, then the number of times DSH that the image data is to be decimated is decremented by 1. The number of times DSH has an initial value of 0.

According to the fifth embodiment, therefore, the same low-pass filter can have a plurality of characteristics for widening the range of AF control operation. Since the amount of image data supplied to the microcomputer 7 is reduced, its operation to process the supplied image data is also reduced.

Inasmuch as the image data is horizontally and vertically limited to frequency bands required, the AF control system is subject to less random noise which would otherwise make the AF control process unstable. Consequently, the AF control process can be performed even when the optical system is largely brought out of focus.

While the image data is decimated sequentially in the horizontal and vertical directions, the image data may be decimated simultaneously in the horizontal and vertical directions.

The storage capacity of the buffer memory 18 may not be large enough to store one field of image data, but may be smaller if it can transfer stored image data to a circuit in a subsequent stage.

The decimating ratio determining circuit 20 may employ other information such as a subject spectrum shift or past focus-evaluating information for determining a decimating ratio.

With the above-described embodiments of the invention, it is possible reliably to automatically focus an optical system even when it is largely out of focus, a condition that has not been corrected by the previously proposed AF control systems.

The AF control systems embodying the invention are also capable of reliably automatically focusing their optical systems on a subject even when the subject has less surface irregularities and fails to produce sufficient contrast information.

## Claims

1. An automatic focusing control system comprising:

   an image pickup device for producing image data of a subject;

   an optical system for varying a relative position thereof with respect to the image pickup device in response to an control signal;

   means for dividing the image data from said image pickup device into a plurality of frequency bands;

   means for detecting level changes of image data components in the respective frequency bands before and after the relative focused position on the image pickup device is varied by said optical system, and generating a level change pattern representing the detected level changes; and

   means for estimating a focused position of said optical system with respect to said image pickup device from said level change pattern.

2. An automatic focusing control system according to claim 1, further comprising means for applying a control signal indicative of the estimated focused position to said optical system to bring said optical system into a focused position with respect to said image pickup device.

3. An automatic focusing control system according to claim 1, wherein said means for detecting comprises means for generating said level change pattern from differences between the image data components in the respective frequency bands before and after the relative focused position on the image pickup device is varied by said optical system.

4. An automatic focusing control system according to claim 1, wherein said means for detecting comprises means for generating said level change pattern from ratios between the image data components in the respective frequency bands before and after the relative focused position on the image pickup device is varied by said optical system.

5. An automatic focusing control system according to claim 3, wherein said means for detecting comprises means for detecting the image data components in the respective frequency bands and converting the detected image data components into respective logarithms.

6. An automatic focusing control system according to claim 1, wherein said means for estimating comprises means for estimating the focused position based on similarity of said level change pattern to a reference pattern.

7. An automatic focusing control system according to claim 1, wherein said means for estimating comprises means for estimating the focused position based on a gradient of said level change pattern with respect to a frequency axis.

8. In an automatic focusing control system having an optical system for varying a relative position thereof with respect to an image pickup device in response to a control signal, and a microcomputer for estimating a direction toward a focused position of the optical system with respect to the image pickup device based on a high-frequency component of image data from the image pickup device and actuating said optical system based on the estimated direction,
   means for decimating the image data from the image pickup device at least in one direction on an image pickup surface of the image pickup device at at least one time or position ratio, and supplying the image data from the image pickup device and the decimated image data to said microcomputer.

9. In an automatic focusing control system having an optical system for varying a relative position thereof with respect to an image pickup device in response to an control signal, and a microcomputer for estimating a direction toward a focused position of the optical system with respect to the image pickup device based on a high-frequency component of image data from the image pickup device and actuating said optical system based on the estimated direction,
   means for decimating the image data from the image pickup device in at least one direction on an image pickup surface of the image pickup device at a predetermined time or position ratio, and supplying the decimated image data to said microcomputer.

10. An automatic focusing control system according to claim 8, wherein said microcomputer has a circuit for extracting a plurality of high-frequency components from the image data from the image pickup device, and means for estimating said direction toward the focused position based on the extracted high-frequency components.

11. An automatic focusing control system according to claim 9, wherein said microcomputer has a circuit for extracting the high-frequency component from the image data from the image pickup device, and means for determining a decimating ratio based on at least the extracted high-frequency component.

12. An automatic focusing control system according to claim 8 or 9, wherein said at least one direction on the image pickup surface of the image pickup device is a main scanning direction or an auxiliary scanning direction.

# FIG.1

# FIG. 2

```
                    ┌─────────────────────────┐
                    │                         │
         ┌──────────│                         │
         │          ▼                         │
         │        ╱   ╲        21             │
         │      ╱       ╲                     │
    NO   │    ╱  AF Control ╲                 │
    ─────┘   ╱   started  ?  ╲                │
            ╲               ╱                 │
              ╲           ╱                   │
                ╲       ╱                     │
                  ╲   ╱                       │
                    │ YES                     │
                    ▼                         │
            ┌───────────────┐                 │
            │   Move lens    │──22            │
            └───────────────┘                 │
                    │                         │
                    ▼                         │
                  ╱   ╲      23               │
                ╱       ╲                     │
    NO        ╱ HF Component ╲                │
    ─────────╱  increased ?   ╲               │
    │        ╲               ╱                │
    │          ╲           ╱                  │
    ▼            ╲       ╱                    │
┌──────────────┐   ╲   ╱                      │
│Move lens in  │     │ YES                    │
│opposite      │──24 │                        │
│direction     │     │                        │
└──────┬───────┘     │                        │
       │             ▼                        │
       └──────────►──┤                        │
                    ▼                         │
            ┌───────────────┐                 │
            │   Move lens    │──25             │
            └───────────────┘                 │
                    │                         │
                    ▼                         │
                  ╱   ╲      26               │
                ╱       ╲           YES       │
              ╱ HF Component ╲      ──────────┘
             ╱  increased ?   ╲
             ╲               ╱
               ╲           ╱
                 ╲       ╱
                   ╲   ╱
                     │ NO
                     ▼
            ┌────────────────────┐
            │  Move back lens     │──27
            │ slightly and stop lens│
            └────────────────────┘
```

## FIG. 3

Magnitude of Focus – Evaluating Value

[ A ]

[ B ]

$\alpha$

Focused Position

Lens Position

## FIG. 4

Magnitude of Focus – Evaluating Value

a

b

c

d

Focused Position

Lens Position

# FIG. 5

# FIG. 6

# FIG. 7A

①  —30

Set lens moving direction as leftward direction  —31

②  —32

Read Pd (pd0～pd7)  —33

Slightly move lens in set direction  —34

Read P(p0～p7)  —35

$q0 \leftarrow p0 - pd0$
$\vdots$
$q7 \leftarrow p7 - pd7$  —36

Pd(pd0;··,pd7)←P(p0,··,p7)  —37

Write Pd(pd0～pd7)  —38

j←0 ;MINu←100;MINd←100  —39

①

# FIG. 7B

①

$$Duj = \sum_{i=0}^{7}(q<i>-r'uj<i>)^2 \quad 40$$

41 — Duj < MINu ? → NO

YES

MINu ← Duj — 42

$$Ddj = \sum_{i=0}^{7}(q<i>-r'dj<i>)^2 \quad 43$$

44 — Ddj < MINd ? → NO

YES

MINd ← Ddj — 45

j ← j + 1 — 46

NO ← 47 — i > 7 ?

YES 48

MINu < MINd? — YES → Move lens to left — 49

NO 50

MINu > MINd ? — YES → Move lens to right — 51

NO

①

②

18

# FIG.8A

Focused Position is Left
of Focusing Lens

# FIG.8B

Focused Position is Right
of Focusing Lens

# FIG.9

## FIG.10A

①  — 60

Set lens moving direction
as leftward direction  — 61

②  — 62

Read  Pd(pd0～pd7)  — 63

Slightly  move  lens
in set  direction  — 64

Read  P(p0～p7)  — 65

$q0 \leftarrow p0 / pd0$
$q7 \leftarrow p7 / pd7$  — 66

Pd(pd0,··,pd7)←P(p0,··,p7)  — 67

Write  Pd(pd0～pd7)  — 68

$n \leftarrow 0; NP \leftarrow 0; NM \leftarrow 0$  — 69

①

# FIG.10B

# FIG.11A

Ratio

1

$q_0$　$q_1$　$q_2$　$q_3$　$q_4$　$q_5$　$q_6$　$q_7$

Frequency

Focused　Position　is　Left
of　Focusing　Lens

# FIG.11B

Ratio

1

$q_0$　$q_1$　$q_2$　$q_3$　$q_4$　$q_5$　$q_6$　$q_7$

Frequency

Focused　Position　is　Right
of　Focusing　Lens

# FIG.12A

Count

Gradient

− +

Focused Position is
Left of Focusing Lens

# FIG.12B

Count

Gradient

− +

Focused Position is
Right of Focusing Lens

# FIG.13

```
        ┌───────────┐
        │     ①     │─── 90
        └───────────┘
              │
              ▼
   ┌─────────────────────────┐
   │ Set lens moving direction│─── 91
   │ as leftward   direction  │
   └─────────────────────────┘
              │
              ▼
   ┌─────────────────────────┐
   │ Read  LPd(1pd0~1pd7)    │─── 92
   └─────────────────────────┘
              │
              ▼
   ┌─────────────────────────┐
   │ Slightly  move  lens  in │─── 93
   │ set   direction          │
   └─────────────────────────┘
              │
              ▼
   ┌─────────────────────────┐
   │ Read  P(p0~p7)          │─── 94
   └─────────────────────────┘
              │
              ▼
   ┌─────────────────────────┐
   │ lp0 ←  log[p0]          │
   │        ⋮                │─── 95
   │ lp7 ←  log[p7]          │
   └─────────────────────────┘
              │
              ▼
   ┌─────────────────────────┐
   │ q0 ← lp0 ~ lpd0         │
   │      ⋮                  │─── 96
   │ q7 ← lp7 ~ lpd7         │
   └─────────────────────────┘
              │
              ▼
   ┌─────────────────────────┐
   │ LPd(1pd0;⋯,1pd7)←(1p0;⋯,1p7)│─── 97
   └─────────────────────────┘
              │
              ▼
   ┌─────────────────────────┐
   │ Write  LPd(1pd0~1pd7)   │─── 98
   └─────────────────────────┘
              │
              ▼
```

# $FIG.14A$

# $FIG.14B$

## FIG.15

## FIG.16

# FIG.17

One Horizontal Scanning Period

AF Image Data Detecting Period

LPF 15 Input
(Decimating Ckt Output)
Sampling Frequency $t_s$

F·F 16 Output Sampling
Frequency $t_s/2$

Memory 17 Output Sampling
Frequency $t_s$

Switch 14
(Hi:Supplied to Camera Ckt)

F·F 16 Output

Memory 17 Output

Undecimated Data

1/2-Decimated Data

1/4-Decimated Data

1/8-Decimated Data

1/16-Decimated Data

Ⓐ

$2/t_s$    $1/t_s$

# FIG.18

FIG.19